# EUROPEAN PATENT APPLICATION

(11) **EP 4 564 484 A1**
(43) Date of publication of application: **04.06.2025**
(21) Application number: 23914389.4
(22) Date of filing: 09.11.2023
(51) Int. Cl.: H01M 4/62, H01M 4/134, H01M 4/133, H01M 10/0525

(54) **NEGATIVE ELECTRODE SHEET AND LITHIUM-ION BATTERY**

(30) Priority: 03.01.2023 CN 202310004330
(71) Applicant: Honor Device Co., Ltd., Shenzhen, Guangdong 518040 (CN)
(72) Inventor: WU, Xia, Shenzhen, Guangdong 518040 (CN); YU, Zhihao, Shenzhen, Guangdong 518040 (CN); LI, Wenwen, Shenzhen, Guangdong 518040 (CN)
(74) Representative: Isarpatent
(86) International application number: PCT/CN2023/130591
(87) International publication number: WO 2024/146252

(57) **Abstract**

This application discloses a negative electrode sheet and a lithium ion battery. In the negative electrode sheet, an active material layer is attached to an inner surface of a negative electrode current collection layer, and a heat transport structure extending from the surface to the interior is configured in the active material layer. The heat transport structure includes a heat transport layer and a heat transport column. The heat transport layer is attached between the active material layer and the lithium replenishment layer. Heat transport holes are opened in the active material layer by laser. Multiple heat transport columns attached to an inner surface of the heat transport layer are inserted into corresponding heat transport holes. When a lithium replenishment procedure is performed through the lithium replenishment layer, the heat generated is absorbed by the heat transport layer, and transported by the heat transport column to the negative electrode current collection layer. By means of this, a heat dissipation path extending from the surface to the interior of the electrode sheet is attained, to solve the problems of increased by-products on the surface of the active material layer and film falling and shedding of the electrode sheet caused by heat generation in the lithium replenishment process of the negative electrode sheet, and avoid the influence on the performance of lithium ion batteries.

## Description

This application claims priority to Chinese Patent Application No. 202310004330.7, entitled "Negative electrode sheet and lithium ion battery" and filed on January 3, 2023, which is incorporated herein by reference in its entirety.

### TECHNICAL FIELD

This application relates to the technical field of lithium ion batteries, and in particular, to a negative electrode sheet and a lithium ion battery.

### BACKGROUND

With the increasing requirements for lightweighting and thinning and long battery life of mobile phones/laptop computers and other consumer products, the volumetric energy density (ED) of lithium ion batteries is becoming higher and higher. Improving the gram capacity of the positive and negative electrode materials is an important measure to improve the ED of batteries. Si materials are used as a negative electrode active material in batteries because of their high gram capacity, to effectively improve the ED of the battery core. However, compared with graphite materials, Si materials need to consume more active lithium ions to form the SEI film on the surface, and inactive substances in the Si materials also consume some lithium ions, causing the decrease in initial coulombic efficiency of the battery, which is lower than that of graphite materials. Therefore, to improve the initial coulombic efficiency of batteries with a Si negative electrode and exert the advantages of high gram capacity of Si materials, a procedure of lithium replenishment in Si negative electrodes is often needed.

The existing lithium replenishment methods include lithium replenishment by calendering and lithium replenishment by evaporation, etc. However, the metallic lithium used for lithium replenishment in such methods is relatively active. When contacting with Si materials, electrons spontaneously move to the Si negative electrode, and the reactivity is high. With lithium ions are intercalated in the Si negative electrode, a lot of heat is released in this process. In addition, when the humidity control in the lithium replenishment workshop is insufficient, the metallic lithium is prone to side reactions with oxygen, nitrogen and carbon dioxide in the air. These chemical reactions will lead to the large release of heat, and a too high temperature rise of the electrode sheet. Shedding or even film falling piece by piece from the electrode sheet is caused due to a too high surface temperature of the electrode sheet. Therefore, the active substances are destroyed, causing deteriorated performances of lithium ion batteries and even low yield of the electrode sheet.

### SUMMARY

This application provides a negative electrode sheet and a lithium ion battery, to solve the problem that heat generated in the existing lithium replenishment procedure affects the performance of lithium ion batteries.

According to a first aspect, this application provides a negative electrode sheet, including: a negative electrode current collection layer; an active material layer, attached to an inner surface of the negative electrode current collection layer, where one end of the active material layer away from the negative electrode current collection layer is opened with a heat transport hole, and a length direction of the heat transport hole extends towards one end close to the negative electrode current collection layer; a heat transport structure, including a heat transport layer and a heat transport column, where an inner surface of the heat transport layer is attached to the one end of the active material layer away from the negative electrode current collection layer, one end of the heat transport column is attached to the inner surface of the heat transport layer, and the other end of the heat transport column is inserted into the heat transport hole; and a lithium replenishment layer, where the lithium replenishment layer is attached to an outer surface of the heat transport layer, and the lithium replenishment layer is obtained by performing a lithium replenishment procedure on an assembly of the negative electrode current collection layer, the active material layer and the heat transport structure, where the heat transport layer is configured to absorb the heat generated in the lithium replenishment procedure, and transport the heat through the heat transport column to the negative electrode current collection layer, to achieve an effect of dissipating the heat generated in the lithium replenishment procedure.

In this manner, a heat transport structure extending from the surface to the interior is configured in the negative electrode sheet. When a lithium replenishment procedure is performed through the lithium replenishment layer, the heat generated is absorbed by the heat transport layer, and transported by the heat transport column to the negative electrode current collection layer. By means of this, a heat dissipation path extending from the surface to the interior of the electrode sheet is attained, to solve the problems of increased by-products on the surface of the active material layer and film falling and shedding of the electrode sheet caused by heat generation in the lithium replenishment process of the negative electrode sheet, and avoid the influence on the performance of lithium ion batteries.

In some embodiments of this application, one end of the heat transport hole facing the negative electrode current collection layer has a first distance L₁ from the inner surface of the negative electrode current collection layer; and the heat transport column inserted into the heat transport hole has the first distance L₁ from the inner surface of the negative electrode current collection layer. In this way, a first type of heat dissipation path is formed. That is, by transporting the heat by the heat transport column and the active material layer between the heat transport column and the negative electrode current collection layer to the negative electrode current collection layer, a heat dissipation path extending from the surface to the interior of the electrode sheet is attained.

In some embodiments of this application, the heat transport hole extends through the inner and outer surfaces of the active material layer; and the heat transport column inserted into the heat transport hole is connected between the heat transport layer and the negative electrode current collection layer. In this way, a second type of heat dissipation path is formed. That is, by transporting the heat by the heat transport column to the negative electrode current collection layer, a heat dissipation path extending from the surface to the interior of the electrode sheet is attained.

In some embodiments of this application, the number of the heat transport hole is the same as that of the heat transport column, and both of them are multiple. The size of the heat transport hole is the same as that of the heat transport column. In this way, a certain number of heat transport holes and heat transport columns are ensured, to improve the heat dissipation effect.

In some embodiments of this application, in a width direction of the negative electrode sheet, the negative electrode sheet has an electrode sheet width, and the number of the heat transport hole is a first numerical value. In a length direction of the negative electrode sheet, the negative electrode sheet has an electrode sheet length, and the number of the heat transport hole is a second numerical value. The electrode sheet width, the electrode sheet length, the first numerical value, and the second numerical value meet a first ratio relationship. Accordingly, the heat transport holes are ensured to be uniformly distributed, and an interlocking ratio is achieved to improve the heat dissipation effect.

In some embodiments of this application, the inner surface of the heat transport layer is provided with multiple heat transport columns, and the multiple heat transport columns are perpendicular to the heat transport layer. In this manner, the heat transport layer in contact with the lithium replenishment layer absorbs heat, and then the heat is transported vertically by the heat transport column to the negative electrode current collection layer, to achieve heat dissipation.

In some embodiments of this application, the heat transport layer has a first thickness, the heat transport column has a second thickness, and the active material layer has a third thickness. The first thickness and the third thickness meet a second ratio relationship, and the second thickness and the third thickness meet a third ratio relationship. As such, a negative electrode sheet with an optimum ratio can be obtained, which can not only improve the heat dissipation effect, but also improve the performance of the lithium ion battery.

In some embodiments of this application, the lithium replenishment layer includes multiple lithium replenishment blocks distributed in a rectangular array. A second distance L₂ is present between two adjacent lithium replenishment blocks, where 0≤L₂≤5mm. Therefore, the lithium replenishment layer has a discrete surface, and no by-product is produced during the lithium replenishment procedure. The heat dissipation effect can be improved without affecting the performance of the lithium ion battery.

In some embodiments of this application, the material of the active material layer includes a Si-graphite active material; and the material of the heat transport structure includes one of graphite, graphene, carbon tubes or carbon fibers. As a result, the performance of the lithium ion battery is improved by the Si-graphite active material, and the heat dissipation effect is improved by one of graphite, graphene, carbon tubes or carbon fibers.

In a second aspect, this application provides a lithium ion battery, which includes a battery core, an electrolyte solution, and a packaging film, where the battery core and the electrolyte solution are both provided inside the packaging film. The battery core includes a positive electrode sheet, a separator, and a negative electrode sheet according to the first aspect. The positive electrode sheet and the negative electrode sheet are separated by the separator and arranged in a stacked state.

### BRIEF DESCRIPTION OF DRAWINGS

To describe the technical solutions in embodiments of this application more clearly, the following briefly describes the accompanying drawings required for describing the embodiments. Apparently, a person of ordinary skill in the art may derive other drawings from these accompanying drawings without creative efforts.
FIG. 1 is a schematic structural view of a lithium ion battery according to an embodiment of this application;
FIG. 2 is a cross-sectional view of a lithium ion battery according to an embodiment of this application;
FIG. 3 is a schematic structural view of a first-type negative electrode sheet 30 according to an embodiment of this application;
FIG. 4 is a schematic structural view of a first-type negative electrode sheet 30 provided with a heat transport hole 103 according to an embodiment of this application;
FIG. 5 is a top view of an active material layer 102 provided with a heat transport hole 103 according to an embodiment of this application;
FIG. 6 is a schematic structural view of a second-type negative electrode sheet 30 provided with a heat transport hole 103 according to the first embodiment of this application; and
FIG. 7 is a schematic structural view of a second-type negative electrode sheet 30 according to an embodiment of this application.

### DESCRIPTION OF EMBODIMENTS

The following clearly describes technical solutions in embodiments of this application with reference to the accompanying drawings in embodiments of this application. Apparently, the described embodiments are some rather than all of embodiments of this application. Other embodiments obtained by a person skilled in the art based on embodiments of this application without creative efforts shall fall within the protection scope of this application.

The terms "first" and "second" mentioned below are merely intended for a purpose of description, and shall not be understood as an indication or implication of relative importance or implicit indication of the number of indicated technical features. Therefore, a feature defined by "first" or "second" can explicitly or implicitly includes one or more features. In the description of this application, unless otherwise stated, "a plurality of" means two or more than two.

In addition, in this application, positional terms such as "upper", "lower", "inner", and "outer" are defined relative to an illustrative position of a component in the accompanying drawings. It should be understood that these directional terms are relative concepts and are used for relative description and clarification, and may vary accordingly depending on the change of position where a component is placed in the accompanying drawings.

In embodiments of the present invention, the electronic device includes, but is not limited to, a mobile phone, a notebook computer, a tablet computer, a laptop computer, a personal digital assistant or a wearable device, etc. Description is provided below by using an example in which the electronic device is a mobile phone.

With the increasing requirements for lightweighting and thinning and long battery life of mobile phones/laptop computers and other electronic devices, volumetric energy density (ED) of lithium ion batteries is becoming higher and higher. Improving the gram capacity of the positive and negative electrode materials is an important measure to improve the ED of batteries. At present, the gram capacity of graphite materials is close to the theoretical limit (372 mAh/g), and the gram capacity of Si materials (the theoretical limit is 4200 mAh/g) is much higher than that of graphite materials, and the Si materials have many advantages, such as moderate potential in deintercalation and intercalation of lithium ions, abundant reserves, low price, environmental protection and non-toxicity, and mature preparation process. Therefore, ED of the battery core can be effectively improved by using the Si material with high gram capacity as the negative electrode active material of a battery to replace the graphite material.

However, there is a huge volume effect in the process of lithium intercalation into and deintercalation from the Si material, and the volume change rate caused by expansion/contraction is as high as 400%. Compared with graphite materials, Si materials need to consume more active lithium ions to form the SEI film on the surface, and inactive substances in the Si materials also consume some lithium ions, causing the decrease in initial coulombic efficiency of the battery, which is lower than that of graphite materials. Therefore, to improve the initial coulombic efficiency of batteries with a Si negative electrode and exert the advantages of high gram capacity of Si materials, a procedure of lithium replenishment in Si negative electrodes is often needed.

The existing lithium replenishment methods include lithium replenishment by calendering and lithium replenishment by evaporation, etc. A lithium replenishment interface is formed on the surface of the negative electrode sheet, and the lithium replenishment procedure is completed at the lithium replenishment interface. However, the metal lithium used for lithium pre-replenishment is extremely active, which is prone to side reactions with oxygen, nitrogen and carbon dioxide in the air, and also reacts with the silicon material quickly. These chemical reactions will lead to the large release of heat and a too high temperature rise of the electrode sheet. Problems such as film falling from the electrode sheet, aggravated side reaction of active lithium, and even low yield of the electrode sheet tend to occur after lithium replenishment, and safety accidents such as smoking and fire may be caused in serious cases.

To reduce the influence of heat generated during the lithium replenishment procedure on the battery performance, an embodiment of this application provides a lithium ion battery. A heat transport structure is added in the Si negative electrode sheet with a high gram capacity, to solve the problems of increased by-products on the surface of the active material layer and film falling and shedding of the electrode sheet caused by large heat generation in the lithium replenishment process of the Si negative electrode sheet, and improve the battery performance.

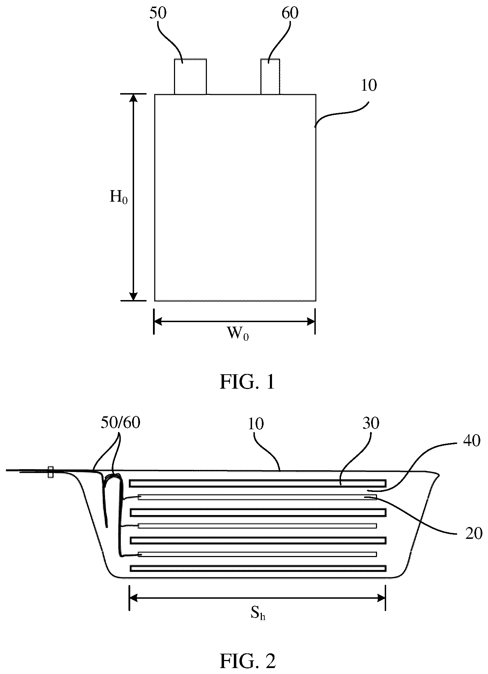

FIG. 1 is a schematic structural view of a lithium ion battery according to an embodiment of this application.

As shown in FIG. 1, in some embodiments, the lithium ion battery may include a battery core, an electrolyte solution, and a packaging film 10. The packaging film 10 is a casing with a cavity, and the battery core and the electrolyte solution are both provided inside the packaging film 10. The battery core is an electric power storage portion in a rechargeable battery. The electrolyte solution is a carrier for ion transport in the battery, which consists generally of a lithium salt and an organic solvent. The electrolyte solution serves to conduct ions between the positive and negative electrodes of the lithium ion battery, and ensures the lithium ion battery to obtain a high voltage and a high specific energy.

FIG. 2 is a cross-sectional view of a lithium ion battery according to an embodiment of this application.

As shown in FIG. 2, in some embodiments, the battery core may include a positive electrode sheet 20, a separator 40, and a negative electrode sheet 30. When the battery core adopts a stacked structure, multiple positive electrode sheets 20 and multiple negative electrode sheets 30 can be provided, and both the positive electrode sheet 20 and the negative electrode sheet 30 can be a thin and flat structure. When a battery core is formed to have a stacked structure, multiple positive electrode sheets 20 and multiple negative electrode sheets 30 are separated by the separators 40, and the positive electrode sheets 20 and the negative electrode sheets 30 are arranged alternately. That is, there is one negative electrode sheet 30 between two adjacent positive electrode sheets 20 and there is one positive electrode sheet 20 between two adjacent negative electrode sheets 30. The various electrode sheets are stacked together, and adjacent positive electrode sheet 20 and negative electrode sheet 30 are separated by the separator 40. The separators 40 separate the various electrode sheets in the form of a "z"-shaped structure and accommodated in the packaging film 10, to obtain a stacked battery core. For example, the separator 40 can be made of a porous polymer material.

The positive electrode sheet 20 is connected to a positive electrode tab 50, and the negative electrode sheet 30 is connected to a negative electrode tab 60. The number of the positive electrode tab 50 is the same as that of the positive electrode sheet 20, and the number of the negative electrode tab 60 is the same as that of the negative electrode sheet 30. The positive electrode tab 50 and the negative electrode tabs 60 extend out of the packaging film 10 in a length direction.

Referring to FIG. 1, the lithium ion battery has a width of W₀ and a length of H₀. The length direction of the chip is in the length H₀ direction of the lithium ion battery, and the width direction of the chip is in the width W₀ direction of the lithium ion battery. That is to say, the length Sₕ of the negative electrode sheet 30 extends in the length H₀ direction of the lithium ion battery, and the width direction of the negative electrode sheet 30 is in the width W₀ direction of the lithium ion battery.

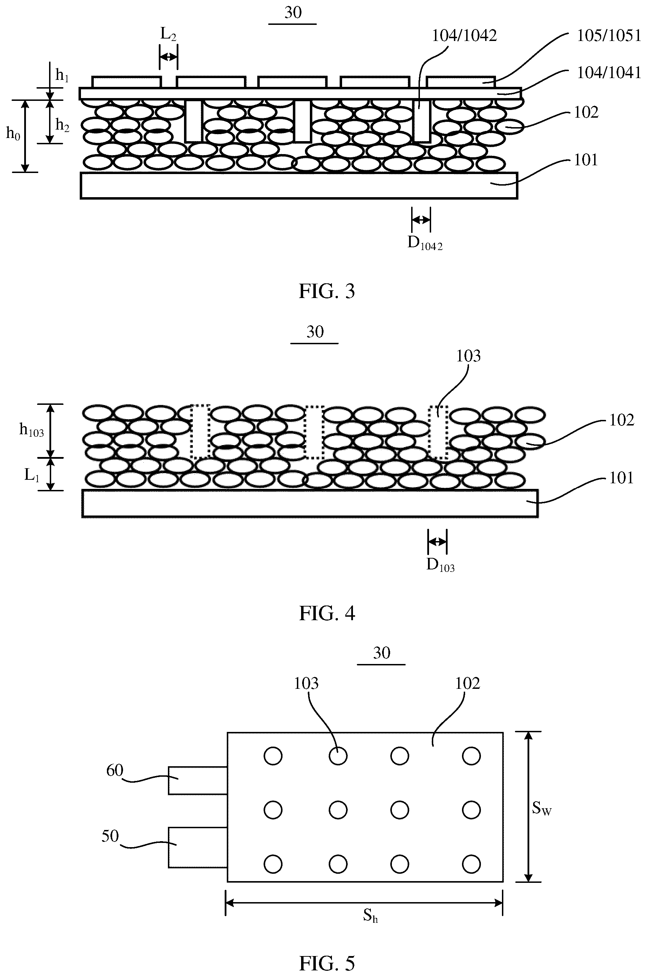

FIG. 3 is a schematic structural view of a first-type negative electrode sheet 30 according to an embodiment of this application.

As shown in FIG. 3, in some embodiments, the negative electrode sheet 30 may include: a negative electrode current collection layer 101, an active material layer 102, a heat transport structure 104, and a lithium replenishment layer 105. The negative electrode current collection layer 101, as a carrier for a negative electrode coating, is used to bear the negative electrode material for conducting electricity. The active material layer 102 is used to improve the ED of the battery core. The lithium replenishment layer 105 is formed by performing a lithium replenishment procedure on an assembly of the negative electrode current collection layer 101, the active material layer 102, and the heat transport structure 104. The heat transport structure 104 is used for heat dissipation during the lithium replenishment procedure.

The negative electrode current collection layer 101 can adopt a flat structure, and the negative electrode current collection layer 101 is made of a copper foil. It can be understood that two opposite surfaces of the copper foil are also coated with the negative active material.

The active material layer 102 is attached to an inner surface of the negative electrode current collection layer 101, and the material of the active material layer 102 may include a Si-graphite active material. The Si-graphite active material is prepared into a slurry, and forms the active material layer 102 on the inner surface of the negative electrode current collection layer 101 by injection molding. For example, the thickness h₀ of the active material layer 102 may be 20-300 µm, and preferably 50-150 µm. It should be noted that to realize the performance of the lithium ion battery, the active material layer 102 may further include a conductive network and a bonding network, which are not described here.

FIG. 4 is a schematic structural view of a first-type negative electrode sheet 30 provided with a heat transport hole 103 according to an embodiment of this application.

As shown in FIG. 4, in some embodiments, an outer surface of the active material layer 102 is a surface of a Si-graphite negative electrode layer, and the surface of the Si-graphite negative electrode layer is used for forming the lithium replenishment layer 105 for the lithium replenishment procedure. The outer surface of the active material layer 102 is the end surface of the active material layer 102 away from the negative electrode current collection layer 101.

To realize the heat dissipation during the lithium replenishment procedure, a heat transport hole 103 is opened at the end of the active material layer 102 away from the negative electrode current collection layer 101 between the lithium replenishment interface and the surface of the Si-graphite negative electrode layer by a laser process. The length direction of the heat transport hole 103 extends towards one end close to the negative electrode current collection layer 101. That is, the heat transport hole 103 is formed by recessing inward from the outer surface of the active material layer 102.

For example, the cross section of the heat transport hole 103 is round, and the diameter D₁₀₃ of the heat transport hole 103 can be 5-200 µm.

FIG. 5 is a top view of an active material layer 102 provided with a heat transport hole 103 according to an embodiment of this application.

As shown in FIG. 5, in some embodiments, to ensure the heat dissipation effect, multiple heat transport holes 103 can be provided. The opening positions of the multiple heat transport holes 103 in the active material layer 102 can be evenly distributed to achieve an interlocking ratio.

In the width direction of the negative electrode sheet 30, the negative electrode sheet 30 has an electrode sheet width S_{w}, and the number of the heat transport hole 103 is a first numerical value n. In the length direction of the negative electrode sheet 30, the negative electrode sheet 30 has an electrode sheet length Sₕ, and the number of the heat transport holes 103 is a second numerical value m. To achieve an interlocking ratio and ensure the heat dissipation effect, the electrode sheet width S_{w}, the electrode sheet length Sₕ, the first numerical value n, and the second numerical value m meet a first ratio relationship.

The relational formula of the first ratio relationship is: S_{w}/(n+1)=Sₕ/(m+1), in which n>10, and m>10.

Referring to FIG. 3 and FIG. 4 again, in an implementation, the heat transport hole 103 extends towards the interior of the active material layer 102 and terminates at a position located at a middle position in the thickness h₀ of the active material layer 102. That is to say, one end of the heat transport hole 103 facing the negative electrode current collection layer 101 has a first distance L₁ from the inner surface of the negative electrode current collection layer 101. The sum of the thickness h₁₀₃ of the heat transport hole 103 and the first distance L₁ is the thickness h₀ of the active material layer 102.

To realize heat dissipation during the lithium replenishment procedure, a highly thermally conductive material is coated on the outer surfaces of the heat transport hole 103 and the active material layer 102, to form the heat transport structure 104. As a result, the heat transport structure 104 includes a heat transport layer 1041 and a heat transport column 1042. The heat transport layer 1041 and the heat transport column 1042 may be integrally formed to obtain the heat transport structure 104. The heat transport structure 104 is made of a highly thermally conductive material. For example, the highly thermally conductive material includes one of graphite, graphene, carbon tubes or carbon fibers.

An inner surface of the heat transport layer 1041 is attached to one end of the active material layer 102 away from the negative electrode current collection layer 101. That is, the heat transport layer 1041 is coated on the outer surface of the active material layer 102.

One end of the heat transport column 1042 is attached to the inner surface of the heat transport layer 1041, and the other end of the heat transport column 1042 is inserted in the heat transport hole 103. The inner surface of the heat transport layer 1041 is provided with multiple heat transport columns 1042, and the multiple heat transport columns 1042 are perpendicular to the heat transport layer 1041. The number of the heat transport holes 103 is the same as that of the heat transport columns 1042, and both of them are multiple. The size of the heat transport hole 103 is the same as that of the heat transport column 1042. Therefore, the heat transport column 1042 inserted into the heat transport hole 103 has the first distance L₁ from the inner surface of the negative electrode current collection layer 101.

The thickness h₂ of the heat transport column 1042 is the same as the thickness h₁₀₃ of the heat transport hole 103, and the diameter D₁₀₄₂ of the heat transport column 1042 is the same as the diameter D₁₀₃ of the heat transport hole 103. The distance between two adjacent heat transport columns 1042 is equal to the distance between two adjacent heat transport holes 103, and the distance between two adjacent heat transport holes 103 depends on the surface area of the active material layer 102, the first numerical value n, and second numerical value m.

To achieve the best heat dissipation effect and battery performance, the heat transport layer 1041 has a first thickness h₁, the heat transport column 1042 has a second thickness h₂, and the active material layer 102 has a third thickness h₀. The first thickness h₁ and the third thickness h₀ meet a second ratio relationship, and the second thickness h₂ and the third thickness h₀ meet a third ratio relationship.

The relational formula of the second ratio relationship is: 0<h₁/h₀<0.2; and the relational formula of the third ratio relationship is: 0.1 <h₂/h₀< 1.

For example, the first thickness h₁ may be 0-50 µm, and preferably 0-20 µm. The second thickness h₂ may be 10-150 µm, and preferably 20-70 µm. The third thickness h₀ may be 20-300 µm, and preferably 50-150 µm.

During the lithium replenishment procedure for the first-type negative electrode sheet 30, the lithium replenishment layer 105 is attached to an outer surface of the heat transport layer 1041, and the lithium replenishment layer 105 is used for the lithium replenishment procedure. The heat generated during the lithium replenishment procedure is absorbed by the heat transport layer 1041, and transported, by the heat transport column 1042 and the active material layer 102 between the heat transport column 1042 and the negative electrode current collection layer 101, to the negative electrode current collection layer 101. By means of this, a heat dissipation path extending from the surface to the interior of the electrode sheet is attained, to solve the problems of increased by-products on the surface of the active material layer and film falling and shedding of the electrode sheet caused by heat generation in the lithium replenishment process of the negative electrode sheet 30.

In some embodiments, the lithium replenishment layer 105 may have a discrete surface. Therefore, the lithium replenishment layer 105 includes multiple lithium replenishment blocks 1051 distributed in a rectangular array. A second distance L₂ is present between two adjacent lithium replenishment blocks 1051, where 0≤L₂≤5mm. By means of the discrete surface, no by-product is produced during the lithium replenishment procedure. The heat dissipation effect can be improved without affecting the performance of the lithium ion battery.

In some embodiments, the value of the second distance L₂ can be 0, whereby the lithium replenishment blocks 1051 are connected with each other, and the lithium replenishment layer 105 becomes a continuous surface.

According to the first-type negative electrode sheet 30 provided in the embodiment of this application, the heat transport structure 104 extending from the surface to the interior is established in the negative electrode sheet 30. The heat transport layer 1041 is attached between the active material layer 102 and the lithium replenishment layer 105. The heat transport holes 103 are opened in the active material layer 102 by laser. Multiple heat transport columns 1042 attached to the inner surface of the heat transport layer 1041 are inserted into corresponding heat transport holes 103. A dangling end of the heat transport column 1042 with respect to the heat transport layer 1041 has a first distance from the negative electrode current collection layer 101. The heat generated during the lithium replenishment procedure for the lithium replenishment layer 105 is absorbed by the heat transport layer 1041, and transported, by the heat transport column 1042 and the active material layer 102 between the heat transport column 1042 and the negative electrode current collection layer 101, to the negative electrode current collection layer 101. By means of this, a heat dissipation path extending from the surface to the interior of the electrode sheet is attained, to solve the problems of increased by-products on the surface of the active material layer and film falling and shedding of the electrode sheet caused by heat generation in the lithium replenishment process of the negative electrode sheet 30.

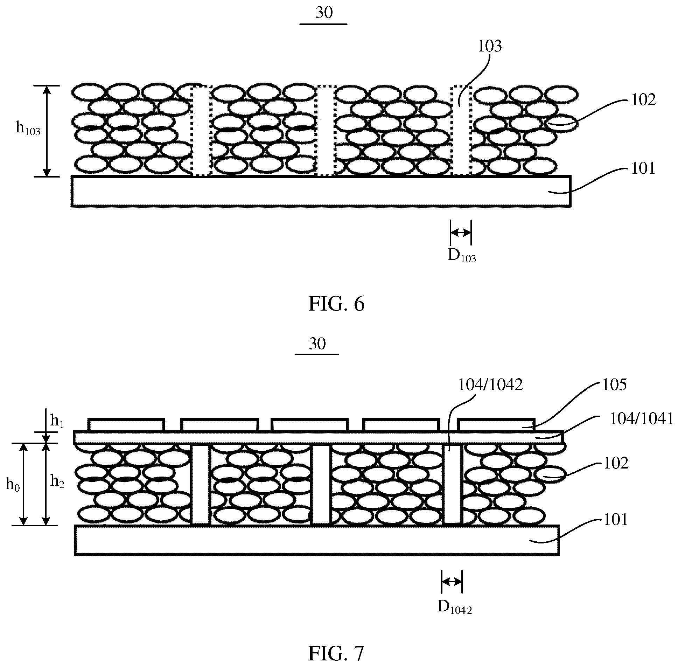

FIG. 6 is a schematic structural view of a second-type negative electrode sheet 30 provided with a heat transport hole 103 according to the first embodiment of this application.

As shown in FIG. 6, in some embodiments, the structure of the second-type negative electrode sheet 30 differs from the structure of the first-type negative electrode sheet 30 in that the thickness of the heat transport hole 103 (heat transport column 1042) is different, and other structures can refer to the description for the structure of the first-type negative electrode sheet 30, which are not repeated here.

In the second-type negative electrode sheet 30, the heat transport hole 103 extends towards the interior of the active material layer 102 and terminates at a position located at the inner surface of the active material layer 102. As a result, the heat transport hole 103 extends through the inner and outer surfaces of the active material layer 102.

For example, the thickness h₁₀₃ of the second-type heat transport hole 103 is the same as the thickness h₀ of the active material layer 102.

FIG. 7 is a schematic structural view of a second-type negative electrode sheet 30 according to an embodiment of this application.

As shown in FIG. 7, in some embodiments, the second-type heat transport column 1042 has the same size as the second-type heat transport hole 103, and the thickness h₂ of the heat transport column 1042 is the same as the thickness h₀ of the active material layer 102. In this way, the heat transport column 1042 inserted into the heat transport hole 103 is connected between the heat transport layer 1041 and the negative electrode current collection layer 101.

Therefore, the relational formula of the third ratio relationship met by the second thickness h₂ of the heat transport column 1042 and the third thickness h₀ of the active material layer 102 is: h₂/h₀=1.

During the lithium replenishment procedure for the second-type negative electrode sheet 30, heated is generated in the lithium replenishment procedure performed on the outer surface of the lithium replenishment layer 105, and the heated is absorbed by the heat transport layer 1041, and transported, by the heat transport column 1042, to the negative electrode current collection layer 101. By means of this, a heat dissipation path extending from the surface to the interior of the electrode sheet is attained, to solve the problems of increased by-products on the surface of the active material layer and film falling and shedding of the electrode sheet caused by heat generation in the lithium replenishment process of the negative electrode sheet 30.

According to the second-type negative electrode sheet 30 provided in the embodiment of this application, the heat transport structure 104 extending from the surface to the interior is established in the negative electrode sheet 30. The heat transport layer 1041 is attached between the active material layer 102 and the lithium replenishment layer 105. The heat transport holes 103 are opened in the active material layer 102 by laser, and the heat transport holes 103 are through holes. The multiple heat transport columns 1042 attached to the inner surface of the heat transport layer 1041 are inserted into corresponding heat transport holes 103, and the heat transport columns 1042 are connected between the heat transport layer 1041 and the negative electrode current collection layer 101. The heat generated during the lithium replenishment procedure for the lithium replenishment layer 105 is absorbed by the heat transport layer 1041, and transported, by the heat transport column 1042, to the negative electrode current collection layer 101. By means of this, a heat dissipation path extending from the surface to the interior of the electrode sheet is attained, to solve the problems of increased by-products on the surface of the active material layer and film falling and shedding of the electrode sheet caused by heat generation in the lithium replenishment process of the negative electrode sheet 30.

It should be noted that a person skilled in the art can easily figure out another implementation of this application after considering the specification and practicing this application that is disclosed herein. This application is intended to cover any variations, uses, or adaptive changes of this application. These variations, uses, or adaptive changes follow the general principles of this application and include common general knowledge or common technical means in the art, which are not disclosed in this application. The specification and embodiments are considered as merely exemplary, and the scope and spirit of this application are pointed out in the following claims.

It should be understood that this application is not limited to the precise structures described above and shown in the accompanying drawings, and various modifications and changes can be made without departing from the scope of this application. The scope of this application is subjected only to the appended claims.

## Claims

1. A negative electrode sheet, comprising:
a negative electrode current collection layer (101);
an active material layer (102), attached to an inner surface of the negative electrode current collection layer (101), wherein one end of the active material layer (102) away from the negative electrode current collection layer (101) is opened with a heat transport hole (103), and a length direction of the heat transport hole (103) extends towards one end close to the negative electrode current collection layer (101);
a heat transport structure (104), comprising a heat transport layer (1041) and a heat transport column (1042), wherein an inner surface of the heat transport layer (1041) is attached to the one end of the active material layer (102) away from the negative electrode current collection layer (101), one end of the heat transport column (1042) is attached to the inner surface of the heat transport layer (1041), and the other end of the heat transport column (1042) is inserted into the heat transport hole (103); and
a lithium replenishment layer (105), wherein the lithium replenishment layer (105) is attached to an outer surface of the heat transport layer (1041), and the lithium replenishment layer (105) is obtained by performing a lithium replenishment procedure on an assembly of the negative electrode current collection layer (101), the active material layer (102), and the heat transport structure (104);
wherein the heat transport layer (1041) is configured to absorb the heat generated in the lithium replenishment procedure, and transport the heat through the heat transport column (1042) to the negative electrode current collection layer (101), to achieve an effect of dissipating the heat generated in the lithium replenishment procedure.

2. The negative electrode sheet according to claim 1, wherein
one end of the heat transport hole (103) facing the negative electrode current collection layer (101) has a first distance L₁ from the inner surface of the negative electrode current collection layer (101); and
the heat transport column (1042) inserted into the heat transport hole (103) has the first distance L₁ from the inner surface of the negative electrode current collection layer (101).

3. The negative electrode sheet according to claim 1, wherein
the heat transport hole (103) extends through an inner and an outer surface of the active material layer (102); and
the heat transport column (1042) inserted into the heat transport hole (103) is connected between the heat transport layer (1041) and the negative electrode current collection layer (101).

4. The negative electrode sheet according to claim 2 or 3, wherein
the number of the heat transport hole (103) is the same as that of the heat transport column (1042), and is plural; and
the size of the heat transport hole (103) is the same as that of the heat transport column (1042).

5. The negative electrode sheet according to claim 4, wherein
in a width direction of the negative electrode sheet, the negative electrode sheet has an electrode sheet width, and the number of the heat transport hole (103) is a first numerical value;
in a length direction of the negative electrode sheet, the negative electrode sheet has an electrode sheet length, and the number of the heat transport hole (103) is a second numerical value; and
the electrode sheet width, the electrode sheet length, the first numerical value, and the second numerical value meet a first ratio relationship.

6. The negative electrode sheet according to claim 5, wherein
the inner surface of the heat transport layer (1041) is provided with a plurality of the heat transport columns (1042), and the plurality of the heat transport columns (1042) are perpendicular to the heat transport layer (1041).

7. The negative electrode sheet according to claim 6, wherein
the heat transport layer (1041) has a first thickness, the heat transport column (1042) has a second thickness, and the active material layer (102) has a third thickness; and
the first thickness and the third thickness meet a second ratio relationship, and the second thickness and the third thickness meet a third ratio relationship.

8. The negative electrode sheet according to any one of claims 1 to 7,
the lithium replenishment layer (105) comprises a plurality of lithium replenishment blocks (1051) distributed in a rectangular array; and
a second distance L₂ is present between two adjacent lithium replenishment blocks (1051), wherein 0≤L₂≤5 mm.

9. The negative electrode sheet according to claim 8, wherein
the material of the active material layer (102) comprises a Si-graphite active material; and
the material of the heat transport structure (104) comprises one of graphite, graphene, carbon tubes or carbon fibers.

10. A lithium ion battery, comprising: a battery core, an electrolyte solution, and a packaging film (10), the battery core and the electrolyte solution being both provided inside the packaging film (10); and
the battery core comprising a positive electrode sheet (20), a separator (40), and a negative electrode sheet (30) according to any one of claims 1 to 9, the positive electrode sheet (20) and the negative electrode sheet (30) being separated by the separator (40) and arranged in a stacked state.
